# FASCICULE DE BREVET EUROPEEN

(11) **EP 2 729 951 B1**
(45) Date de publication et mention de la délivrance du brevet: **09.12.2015**
(21) Numéro de dépôt: 12730977.1
(22) Date de dépôt: 02.07.2012
(51) Int. Cl.: H01H 33/59

(54) **SYSTÈME D'INTERRUPTION DE COURANT CONTINU APTE À OUVRIR UNE LIGNE DE COURANT CONTINU À COMPORTEMENT INDUCTIF**
GLEICHSTROMUNTERBRECHUNGSSYSTEM ZUR ÖFFNUNG EINER GLEICHSTROMLEITUNG MIT INDUKTIVEM VERHALTEN
DC CURRENT INTERRUPTION SYSTEM ABLE TO OPEN A DC LINE WITH INDUCTIVE BEHAVIOUR

(30) Priorité: 04.07.2011 FR 1156020
(43) Date de publication de la demande: 14.05.2014
(73) Titulaire: Mersen France SB SAS, 69720 Saint-Bonnet-de-Mure (FR)
(72) Inventeur: SARRUS, Franck, F-69720 Saint Laurent de Mure (FR); BALBONI, Florent, F-69008 Lyon (FR); TOURNIER, Dominique, F-69009 Lyon (FR)
(74) Mandataire: Myon, Gérard Jean-Pierre
(86) Numéro de dépôt international: PCT/EP2012/062838
(87) Numéro de publication internationale: WO 2013/004662

(56) Documents cités:
- US-A- 3 651 374
- US-B1- 6 741 435

## Description

La présente invention concerne un système d'interruption de courant continu apte à ouvrir une ligne de courant continu à comportement inductif.

Plus généralement, le domaine de la présente invention est le domaine des interrupteurs courant continu, connus en anglais sous l'appellation « DC Disconnect switches ».

Les interrupteurs courant continu sont largement utilisés dans diverses applications industrielles, aéronautiques, automobiles ou de distribution d'énergie. Ils permettent d'ouvrir en pleine charge un bus ou une ligne de courant continu longue distance, qui a donc un comportement inductif, afin d'isoler une source d'énergie d'un réseau ou d'une charge.

Il est connu qu'à forte puissance, l'ouverture d'une ligne de courant continu génère de forts arcs électriques à cause de l'énergie stockée dans le réseau électrique. Pour interrompre ces arcs électriques, diverses solutions à base d'interrupteurs mécaniques coûteux et complexes sont connues dans l'état de la technique.

Des solutions hybrides mettant en oeuvre à la fois une partie électronique à base de semi-conducteurs et une partie mécanique ont été proposées.

L'article "Micro-Arcing and Arc Erosion Minimization Using a DC Hybrid Switching Device" de J. Swingler et J. McBride, publié dans le journal IEEE Transactions on Components and Packaging Technologies, vol. 31, n°2, publié le 2 juin 2008, présente un interrupteur hybride comportant une série de trois interrupteurs mécaniques et un transistor à effet de champ de type MOSFET qui a pour fonction de prévenir l'effet d'arc électrique. Pour un bon fonctionnement, l'actionnement des interrupteurs mécaniques dans cette solution doit être effectué selon une séquence précise ce qui est une contrainte de fonctionnement. De plus, cette solution n'est adaptée que pour des tensions autour de 40Volts (V) et 2.5 Ampères (A), et n'est donc pas adaptée à des applications à des lignes de courant continu à plus haute tension.

De nombreuses applications, comme par exemple les applications photovoltaïques, nécessitent des tensions autour de 600V, et des courants autour de 30A.

Il est souhaitable de remédier aux inconvénients de l'état de la technique, et d'obtenir un interrupteur courant continu à mécanique simplifiée et utilisable en particulier dans un domaine haute tension. Le document "US 3 651 374 A" décrit un système d'interruption de courant continu selon le préambule de la revendication 1.

A cet effet, l'invention a pour objet un système d'interruption de courant continu apte à ouvrir une ligne de courant continu à comportement inductif, comportant un interrupteur mécanique primaire, un interrupteur mécanique secondaire et un circuit électronique de protection de surtension comportant au moins un transistor. Le système d'interruption de courant continu est caractérisé en ce qu'il comporte en outre un système électronique d'ouverture comportant un circuit passif apte à auto-polariser le circuit électronique de protection lors de l'ouverture dudit interrupteur mécanique primaire , afin de déclencher une commutation dudit au moins un transistor permettant de limiter la tension et le courant dans la ligne de courant continu, une coupure totale de ladite ligne de courant continu étant obtenue par ouverture ultérieure dudit interrupteur mécanique secondaire.

Avantageusement, le système électronique d'ouverture prend le relais de l'interrupteur mécanique primaire et permet l'auto-polarisation temporisée du circuit de protection qui est apte à absorber l'énergie dégagée par le transitoire de la source, ce qui permet d'effectuer une interruption tout en prévenant tout arc électrique. Le circuit de protection permet de limiter très fortement l'intensité de courant, et par conséquent l'actionnement de l'interrupteur mécanique secondaire n'a pas besoin d'être synchronisé avec le l'actionnement de l'interrupteur mécanique primaire, donc il n'y a pas de contrainte forte de séquencement des interrupteurs. Dans le système d'interruption de courant selon l'invention, des interrupteurs mécaniques simples et à faible coût sont suffisants.

Le système d'interruption de courant continu selon l'invention peut présenter une ou plusieurs des caractéristiques ci-dessous :
- le circuit électronique de protection comporte une pluralité de transistors à effet de champ montés en parallèle, aptes à commuter dans un mode ohmique dans un premier temps après ouverture dudit interrupteur primaire, puis dans un mode d'avalanche dans un deuxième temps lorsque la tension atteint une valeur prédéterminée ;
- le circuit électronique de protection comporte en outre un système d'équilibrage d'avalanche, permettant de faire fonctionner en mode d'avalanche quasi-simultanément ladite pluralité de transistors à effet de champ ;
- le système d'équilibrage d'avalanche comporte une résistance montée en série avec chaque transistor à effet de champ ;
- le circuit électronique de protection comporte un premier bloc apte à limiter la tension comportant au moins un transistor de premier type, et un deuxième bloc apte à limiter le courant comportant au moins un transistor de deuxième type ;
- le deuxième bloc comporte, pour chaque transistor de deuxième type, une résistance montée en série avec ledit transistor ;
- le système d'interruption de courant continu comporte deux systèmes électroniques d'ouverture, à savoir un premier système électronique d'ouverture d'auto-polarisation rapide apte à actionner ledit premier bloc et un deuxième système électronique d'ouverture d'auto-polarisation lente apte à actionner ledit deuxième bloc, de manière à permettre, lors de l'ouverture dudit interrupteur mécanique primaire, une limitation de la tension par ledit premier bloc suivie d'une limitation de courant par ledit deuxième bloc ;
- lors de l'ouverture dudit interrupteur primaire (S0), les phases suivantes s'enchaînent :
   - mise en oeuvre dudit premier bloc par le système électronique d'ouverture d'auto-polarisation rapide, ledit au moins un transistor de premier type fonctionnant en mode ohmique,
   - mise en oeuvre dudit deuxième bloc par le système électronique d'ouverture d'auto-polarisation lente, ledit au moins un transistor de premier type étant en mode non passant,
   - mise en oeuvre dudit premier bloc lorsque la tension atteint une valeur prédéterminée, ledit au moins un transistor de premier type fonctionnant en mode avalanche ;
- ledit transistor de premier type est un transistor MOSFET et ledit transistor de deuxième type est un transistor IGBT ;
- un dit système électronique d'ouverture comporte au moins un circuit passif composé d'une diode montée en série avec un condensateur, et une résistance montée en parallèle avec ledit condensateur, et
- un nombre de transistors montés en parallèle dans ledit circuit de protection est déterminé en fonction des contraintes en tension, courant et inductance de ladite ligne à courant continu.

D'autres caractéristiques et avantages de l'invention ressortiront de la description qui en est donnée ci-dessous, à titre indicatif et nullement limitatif, en référence aux figures annexées, parmi lesquelles :
- la figure 1 est un schéma de principe d'un système d'interruption de courant continu ;
- la figure 2 est un schéma représentatif d'un premier mode de réalisation d'un système d'interruption de courant continu selon l'invention ;
- les figures 3 à 6 illustrent le fonctionnement du système d'interruption de courant continu de la figure 2 ;
- la figure 7 est un schéma représentatif d'un deuxième mode de réalisation d'un système d'interruption de courant continu selon l'invention ;
- la figure 8 est un schéma représentatif d'un troisième mode de réalisation d'un système d'interruption de courant continu selon l'invention ;
- la figure 9 est un schéma représentatif d'un quatrième mode de réalisation d'un système d'interruption de courant continu selon l'invention,
- la figure 10 est un graphe comprenant des courbes représentatives de l'évolution du courant et de la tension lors de l'actionnement du système d'interruption de courant continu selon le quatrième mode de réalisation pour une ligne 20V/2.5A, et
- la figure 11 est un schéma représentatif d'un cinquième mode de réalisation d'un système d'interruption de courant continu selon l'invention.

Un système d'interruption de courant continu à base de transistors à effet de champ de type MOSFET (« Metal Oxyde Semiconductor Field Effect Transistor ») est décrit dans la suite. Néanmoins, l'invention s'applique avec tout type de composant semi-conducteur, et en particulier avec tout type de transistor à effet de champ.

L'application privilégiée considérée ici est l'utilisation du système d'interruption de courant continu de l'invention dans le cadre de la production de courant photovoltaïque, engendrant un courant de bus ou ligne de courant continu haute tension 600V/30A. L'invention s'applique néanmoins plus généralement avec une large gamme de contraintes de bus à courant continu, dans une plage de tension allant de 20V à 900V (tension maximale pour un composant de type MOSFET à l'heure actuelle), le calibre en courant étant lié au nombre de composants semi-conducteurs mis en parallèle. Les divers composants sont dimensionnés par rapport à l'application visée, selon les contraintes du bus à courant continu.

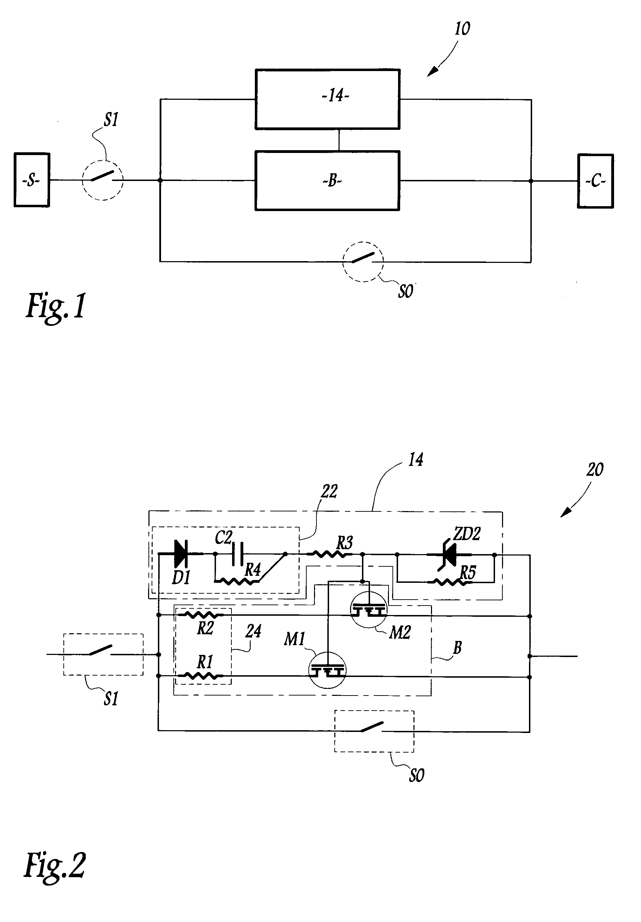

Le système d'interruption de courant continu 10, appelé ci-après simplement système d'interruption, représenté à la figure 1, est apte à ouvrir une ligne de courant continu 12 entre une source S et une charge C. Ce système comporte deux interrupteurs mécaniques S0, S1, ainsi qu'un système électronique d'ouverture à circuit passif 14 qui joue un rôle d'interrupteur électronique à délai pour un circuit de protection de surtension B, qui est un bloc comprenant au moins un composant semi-conducteur ou transistor.

Lorsque l'interrupteur primaire S0 est actionné, le courant passe dans le système électronique d'ouverture 14, qui actionne par auto-polarisation la commutation du ou des transistors du circuit de protection B qui atteignent rapidement leur régime de saturation, ce qui déclenche leur ouverture et permet d'éviter tout arc électrique.

De plus, le circuit de protection B limite le courant à une valeur quasi nulle, ce qui permet ensuite l'ouverture de l'interrupteur secondaire S1 pour une interruption totale.

Grâce au système électronique d'ouverture 14 aucun dispositif de commande externe du circuit électronique de protection n'est nécessaire et l'arc électrique est évité.

La figure 2 illustre un premier mode de réalisation d'un système d'interruption à courant continu 20 à base de transistors de type MOSFET. Dans l'exemple de la figure le système électronique d'ouverture 14 comporte un circuit passif 22 composé d'une diode D1 montée en série avec un condensateur C2, et une résistance R4 montée en parallèle au condensateur C2. Une résistance R3 est montée en sérié avec le circuit passif 22.

Le système électronique d'ouverture 14 représenté à la figure 2 comporte également une résistance R5.

Le système d'interruption 20 comporte également une diode Zener ZD2 montée en parallèle à la résistance R5. Cette diode est optionnelle et a pour effet de protéger la grille du transistor contre une surtension provisoire qui pourrait entraîner sa destruction.

Le circuit électronique de protection B comporte deux composants MOSFET M1 et M2 montés en parallèle, et des résistances R1, R2 montée chacune en série avec un des transistors.

Les résistances forment un système d'équilibrage 24 pour le partage d'énergie entre les deux composants MOSFET M1 et M2 en mode avalanche. En effet, en pratique, la tension d'avalanche Vbr (« breakdown voltage » en anglais) d'un composant MOSFET peut être légèrement différente de la tension d'avalanche théorique de fabrication. Même un léger écart entre les tensions d'avalanche des composants MOSFET montés en parallèle peut avoir un fort impact sur la répartition de l'énergie.

En effet, si par exemple le MOSFET M1 a une tension d'avalanche plus élevée que le MOSFET M2, le MOSFET M2 se met en mode avalanche en premier et absorbe la totalité de l'énergie du circuit, et aucun courant ne passe à travers le MOSFET M1 à tension d'avalanche plus élevée. Dans ce cas, il n'y a pas de répartition d'énergie entre les deux composants MOSFET, alors que l'objectif même d'un montage de plusieurs tels composants en parallèle est de permettre l'absorption d'une énergie plus importante que celle supportable par un seul composant.

Afin de prévenir ce déséquilibrage qui peut avoir lieu si les composants MOSFET montés en parallèle n'ont pas des tensions d'avalanche égales en pratique, des résistances de faible valeur sont placées côté drain de chaque composant MOSFET. Par exemple des résistances R1=R2=1 Ohms pour des composants respectifs M1 et M2 ayant une tension d'avalanche théorique Vbr=900V et des tensions d'avalanche pratiques respectives de plus ou moins 10V autour de la tension d'avalanche sont préconisées.

Ainsi, lorsque le composant MOSFET dont la tension d'avalanche est la plus basse entre en mode avalanche, son courant de drain augmente de manière significative, et la tension aux bornes de la résistance d'équilibrage correspondante est également largement augmentée. Cette tension s'applique également pour la branche parallèle, ce qui permet d'atteindre la tension d'avalanche également dans la deuxième branche, et permet d'actionner le deuxième composant MOSFET en mode avalanche également.

Le système d'interruption 20 ayant un circuit passif capacitif 22 et une pluralité de transistors MOSFET montés en parallèle est adapté pour limiter la tension et le courant pour une ligne à courant continu à faibles contraintes, ayant une inductance inférieure à 3mH (milli Henrys) et un courant allant jusqu'à 10A.

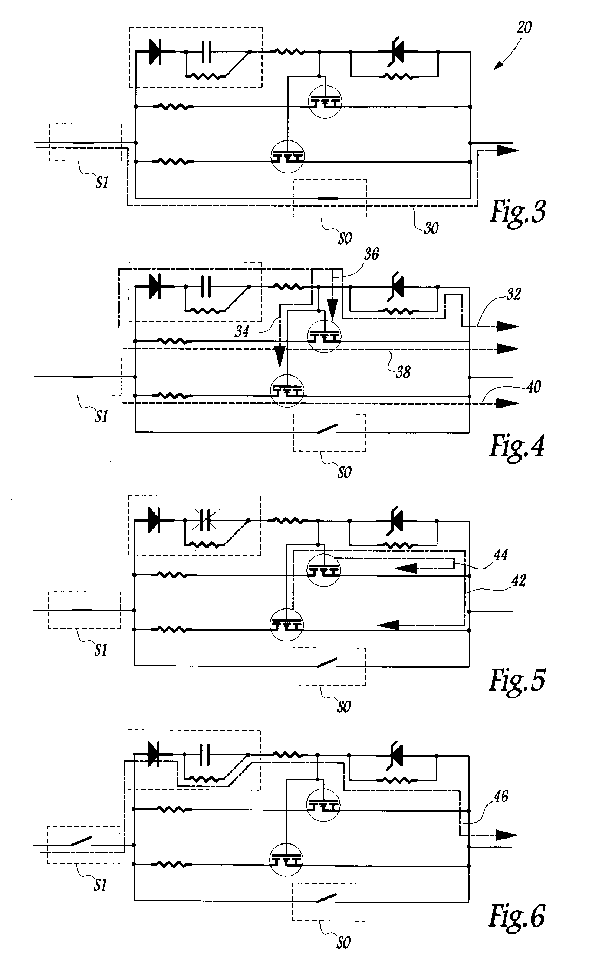

Les figures 3 à 6 illustrent en détail le fonctionnement du système d'interruption 20 de la figure 2.

En fonctionnement nominal, tel qu'illustré à la figure 3, les deux interrupteurs S0 et S1 sont fermés, les composants M1 et M2 sont en mode bloqué. Le bus à courant continu est fermé, et le courant s'écoule selon la ligne 30 représentée à la figure 3.

Lorsque l'interrupteur primaire S0 est ouvert comme illustré à la figure 4, et l'interrupteur secondaire S1 est maintenu fermé, le courant s'écoule selon la ligne 32 pendant la charge du circuit passif à condensateur, et les grilles respectives des composants MOSFET M1 et M2 sont rapidement chargées via R3 selon les flux 34 et 36 (représentés en pointillés sur la figure 4e). Les deux transistors sont passants en mode ohmique, le courant s'écoule selon les lignes 38, 40 de la figure 4 pendant que le circuit passif capacitif continue à se charger. Le choix des valeurs de R3, R5 et de C2 permet de contrôler cette phase de chargement. Par exemple R3= 3Ohms, R5=10Ohms et C2=10nF (nano Farads) sont sélectionnés pour un courant de 5A.

Lorsque la charge du condensateur C2 est terminée, celui-ci agit comme un interrupteur ouvert, comme illustré à la figure 5. Les grilles des composants MOSFET se déchargent via R5 causant une augmentation de la tension Vds de chaque MOSFET, puis les composants MOSFET se mettent en mode avalanche, représenté par les traits pointillés 42 et 44 de la figure 5. La diode D1 a pour effet d'éviter des oscillations importantes de la tension Vds après l'évènement d'avalanche.

Après l'événement d'avalanche des deux transistors MOFSET, un faible courant résiduel continue à s'écouler, comme représenté à la figure 6, selon la ligne 46 à travers les résistances R6-R3-R5. L'interrupteur secondaire S1 est ensuite ouvert pour couper ce faible courant résiduel. L'ouverture de S1 finalise l'ouverture du bus à courant continu 12 et isole complètement la charge de la source.

En pratique, le nombre de composants MOSFET à placer en parallèle dans le circuit de protection B dépend de la tension d'avalanche spécifique des composants et des contraintes, notamment de tension et d'inductance, du bus à courant continu.

Ainsi, pour un bus 600V/30A, on utilise neuf composants MOSFET de technologie CoolMOS (Marque Déposée) de type SPA17N80C3 ayant une tension d'avalanche de 800V pour un bus d'inductance 3mH, ou quatorze tels composants pour un bus d'inductance 5mH. Le nombre de composants MOSFET nécessaire est donc assez élevé pour un bus à haute tension.

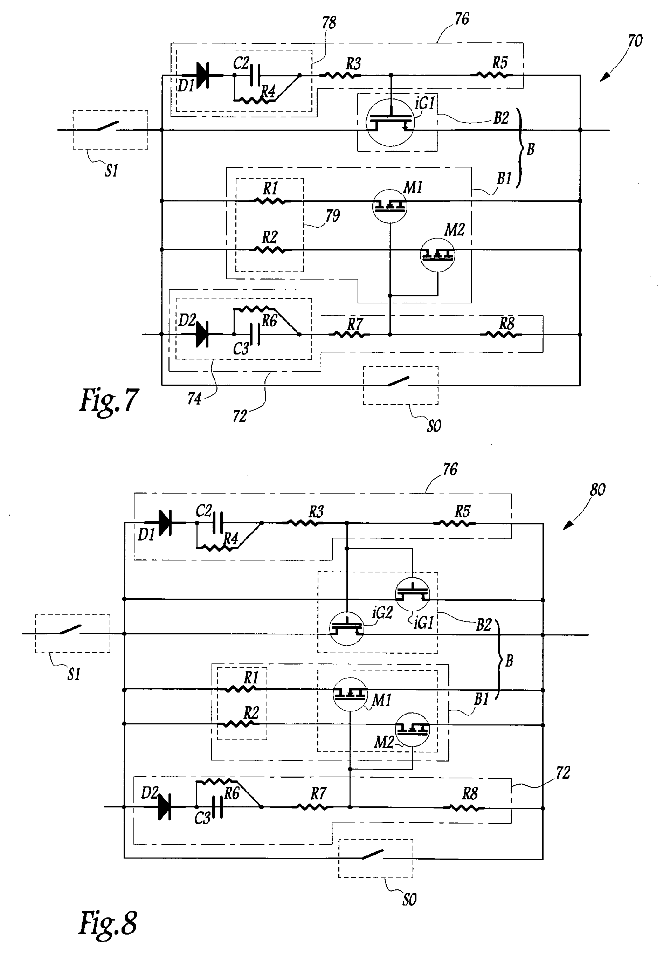

La figure 7 illustre un deuxième mode de réalisation d'un système d'interruption de courant continu selon l'invention, qui est mieux adapté pour un bus à courant continu à haute tension car il nécessite un moindre nombre de composants MOSFET en parallèle.

Dans ce mode de réalisation, le système d'interruption combine des transistors de type MOSFET et un transistor IGBT (« Insulted Gate Bipolar Transistor »).

Le système d'interruption 70 comporte un premier système électronique d'ouverture 72 à circuit passif 74, qui est un système d'auto-polarisation à ouverture rapide, apte à actionner un premier bloc B1 comportant deux transistors de premier type, des transistors MOSFET M1 et M2, montés en parallèle, et un deuxième système électronique d'ouverture 76 à circuit passif 78, qui un système d'auto-polarisation à ouverture lente apte à actionner un deuxième bloc B2, composé d'un ou plusieurs transistors de deuxième type, ici d'un transistor IGBT IG1. Les blocs B1 et B2 forment un circuit fonctionnellement équivalent au circuit de protection B.

Chacun des circuits passifs 74, 78 est composé d'une diode (D2, D1) montée en série avec un condensateur (C3 C2), une résistance (R6, R4) étant également montée en parallèle avec le condensateur, similairement au circuit passif 22 de la figure 2.

Le délai d'ouverture pour former un système à ouverture rapide, dont le condensateur se charge plus vite que celui du système à ouverture lente, est contrôlé par le choix de la constante de temps de la branche de commande, par exemple 100ns pour la plus rapide, et 1.5µs pour la plus lente, la constante de temps étant obtenue par un choix de valeurs de capacité et de résistance adéquat.

Par exemple, on peut sélectionner C2=10nF, R6=800kOhms pour le circuit passif 76, et C2=1nF, R4=800kOhms pour le circuit passif 78. Les diodes D1, D2 sont sélectionnées pour passer la totalité du courant de la ligne de courant continu en un temps très court. Par exemple, des diodes 1 kV, 30A sont utilisées.

Chaque système électronique d'ouverture 72, 76 comprend également des résistances R3, R5 pour le système d'ouverture 76, R7, 68 pour le système d'ouverture 72, similairement au système d'ouverture 14 de la figure 2. Par exemple, des valeurs numériques de ces résistances prennent les valeurs suivantes : R3=50Ohms, R5=1500 Ohms, R7=1Ohms, R8=10Ohms.

Le premier bloc B1 comprenant des composants MOSFET est destiné à limiter la tension et à éviter les arcs électriques, et le deuxième bloc B2 permet une limitation de courant plus rapide.

Le premier bloc B1 comprend également un système d'équilibrage 79 à résistances montées en série au drain de chaque transistor MOSFET, similairement au système d'équilibrage 24 de la figure 2, et ayant la même fonction.

En fonctionnement, lors de l'ouverture de l'interrupteur primaire S0, le circuit passif 74 se charge et les grilles des transistors MOFSET du bloc B1 sont chargées rapidement. Les composants MOFSET se mettent à fonctionner en mode ohmique. Pendant ce temps, le deuxième circuit passif 78 se charge également, et le composant IGBT du deuxième bloc B2 devient passant.

Le circuit passif 74 ayant atteint sa charge complète, une coupure se produit, et les MOSFET M1 et M2 sont également coupés.

Le composant IGBT du deuxième bloc B2 prend le relais jusqu'à la charge complète du condensateur C2 du circuit passif 78. Ensuite, le composant IGBT commute et limite fortement le courant du bus à courant continu.

Cette diminution forte du courant provoque un pic de surtension, qui est absorbé par les composants MOSFET qui se mettent en mode avalanche lorsque la tension du bus de courant dépasse leur tension d'avalanche Vbr. Comme expliqué ci-dessus en référence à la figure 2, le système d'équilibrage 79 permet de répartir l'absorption d'énergie entre les divers transistors MOSFET.

Le fonctionnement en mode avalanche des transistors permet d'éviter un fonctionnement en surtension du composant IGBT, et donc de préserver ce composant.

Après l'événement d'avalanche, à la fois les transistors MOSFET du bloc B1 et le transistor IGBT du bloc B2 sont en mode coupé, le courant est réduit à un faible courant résiduel, qui peut être aisément coupé par l'interrupteur secondaire S1.

Dans un troisième mode de réalisation illustré à la figure 8, le deuxième bloc B2 du système d'interruption 80 est formé de plusieurs IGBT montés en parallèle. En effet, la capacité de coupure d'un seul composant IGBT, décrite dans le SOA (« safe operating area ») associé au composant, qui spécifie pendant combien de temps une impulsion électrique de puissance donnée peut être appliquée à l'IGBT, peut s'avérer insuffisante pour absorber le courant transitoire du bus de courant.

Le nombre de composants IGBT à insérer dans le deuxième bloc B2 dépend des contraintes du bus de courant continu, et également des tensions d'avalanche des transistors MOFSET du premier bloc B1. Dans ce mode de réalisation, la tenue en tension des composants IGBT doit être supérieure à la tension Vbr des composants MOSFET. La tenue en tension des MOSFET et leur énergie d'avalanche maximale doit permettre de dissiper l'énergie stockée dans le réseau.

Ainsi, par exemple, on peut prendre un ou plusieurs IGBT 1KV 50A associé(s) à un ou plusieurs MOSFET 900V 0,7mJ (milli-Joules), pour obtenir une coupure rapide.

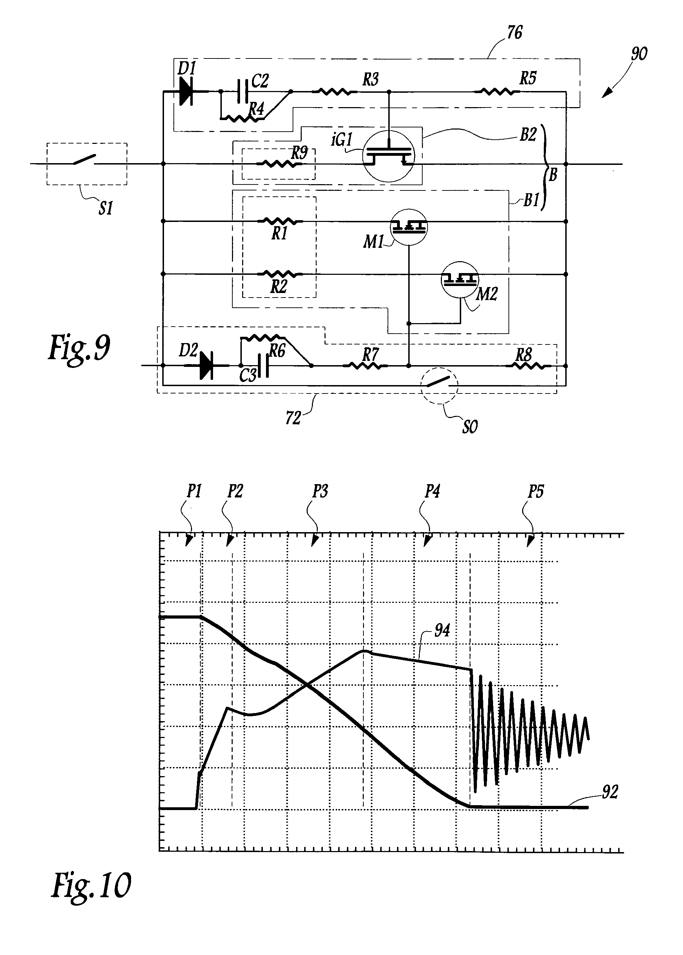

La figure 9 illustre un quatrième mode de réalisation d'un système d'interruption selon l'invention, qui est optimisé en nombre de composants et en coût.

Le système d'interruption 90 de la figure 9 est similaire au système d'interruption 70 de la figure 7, et comporte les interrupteurs primaire S0 et secondaire S1, les systèmes électroniques d'ouverture rapide 72 et lente 76, les blocs B1 et B2.

A la différence du mode de réalisation de la figure 7, le bloc B2 comporte en outre une résistance R9 montée en série avec le collecteur du composant IGBT, de manière à aider à la commutation de ce composant. En effet, une partie de l'énergie dans la phase de conduction de l'IGBT sera dissipée par le composant R9, ce qui permet de réduire les contraintes sur le composant IGBT et de replacer l'IGBT dans un mode de fonctionnement garanti.

Le choix de la valeur de la résistance R9 est effectué en fonction des caractéristiques du composant IGBT. Par exemple, une résistance R9=40 Ohms est choisie avec un composant IGBT 25 A / 1200 V.

En pratique, en utilisant un système d'interruption 90 avec résistance d'aide à la commutation des composants IGBT, on peut utiliser deux composants IGBT 1200V (par exemple des composants FGA20S120M) et deux composants MOSFET avec tension d'avalanche 900V, par exemple des composants IPP90R340C3. Cette topologie permet de diminuer le coût du système d'interruption par rapport au premier mode de réalisation, qui nécessiterait six composants MOSFET avec tension d'avalanche 900V montés en parallèle.

Le système d'interruption 90 de la figure 9 fonctionne de manière analogue au système d'interruption 70 dont le fonctionnement à déjà été décrit en référence à la figure 7.

Les systèmes d'ouverture 72, 76 déclenchent les blocs respectifs B1 et B2, avec d'abord les transistors de B1 en mode ohmique, puis la commutation du ou des transistors IGBT du bloc B2, enfin la reprise du bloc B1 avec les transistors MOSFET en mode avalanche pour atteindre finalement un courant proche de zéro.

Le graphe de la figure 10 illustre l'évolution du courant du bus représenté par la courbe 92, et de la tension aux bornes de l'interrupteur primaire représentée par la courbe 94, en fonction du temps, lorsque le système d'interruption de la figure 9 est mis en oeuvre. Les courbes ont été tracées à partir d'un démonstrateur 20V/2.5 A, mais le comportement est similaire pour de plus hautes tensions.

Le graphe est divisé en cinq phases, numérotées P1 à P5.

Dans la première phase P1, lors de l'ouverture de l'interrupteur primaire S0 et de la charge des systèmes électroniques d'ouverture 72, 76, pendant une courte durée, le courant et la tension se situent à leurs valeurs nominales.

Ensuite, grâce au système électronique d'ouverture à circuit passif rapide 72, le bloc B1 comprenant des transistors MOSFET passe en conduction en mode ohmique, le courant diminue, la tension augmente durant la phase P2. Les transistors MOSFET agissent pour éviter l'arc électrique, tout en diminuant légèrement le courtant.

Le bloc B2 à composants IGBT prend le relais dans la phase suivante P3 pour continuer la limitation du courant, pendant que le bloc B1 passe en mode de non conduction ou mode bloqué. La tension continue d'augmenter jusqu'à atteindre la valeur de la tension d'avalanche des composants MOSFET. A ce moment, les transistors MOSFET du bloc B1 passent en mode avalanche pendant la phase P4. La tension reste stable pendant l'avalanche, le courant continue à diminue.

Enfin, le courant atteint une valeur basse stable pendant la phase P5. La courbe de tension 94 montre quelques oscillations avant de se stabiliser. L'interrupteur secondaire S1 peut être actionné à tout moment pour la coupure complète de courant.

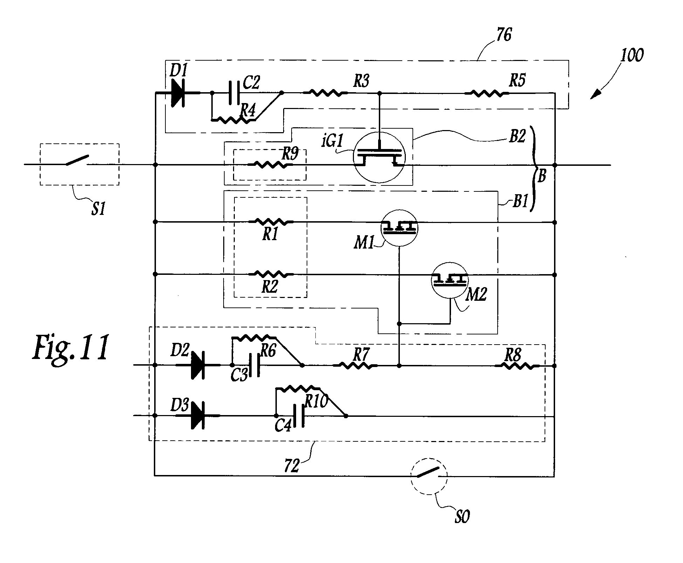

La figure 11 illustre un cinquième mode de réalisation d'un système d'interruption 100 selon l'invention, qui permet d'améliorer encore la protection contre l'apparition d'arc électrique aux bornes des contacts mécaniques par rapport au mode de réalisation de la figure 9.

Dans ce mode de réalisation, le système électronique d'ouverture rapide 72 est amélioré par l'ajout d'une deuxième branche comportant un autre circuit passif composé d'une une diode D3 montée en série avec un condensateur ou capacité C4, une résistance R10 étant également montée en parallèle avec le condensateur C4. A titre d'exemple, les valeurs de composants suivantes sont préconisées pour des courants supérieurs à 3A, le système fonctionnant avec des composants MOSFETS à tension d'avalanche Vbr=900V : C4=500nF, R10=800 kOhms. Une diode D3 1 kV, 30A est adaptée pour passer la totalité du courant de la ligne de courant continu pendant le temps de mise en conduction des composants MOSFETS.

L'ajout d'une capacité permet d'absorber une partie de l'énergie du réseau aux premiers instants après l'ouverture de l'interrupteur mécanique S0, ce qui permet d'éviter l'initialisation d'un arc électrique pendant le temps de mise en conduction des composants MOSFET du bloc B1. La diode D3 et la résistance R10 contrôlent la décharge de la capacité C4. Ce système permet de mieux prévenir le risque d'arc à faible surcoût par rapport au quatrième mode de réalisation, notamment pour des courants supérieurs à 3A.

Ainsi, les divers modes de réalisation d'un système d'interruption de ligne à courant continu présentés permettent d'utiliser des interrupteurs mécaniques à faible coût et sans contrainte forte sur le séquencement de leurs ouvertures respectives, et des composants électroniques semi-conducteurs pour prévenir les arcs électriques et la surtension due au comportement inductif de la ligne de courant continu. Le choix entre la topologie du système d'interruption comportant uniquement des transistors montés en parallèle ou de la topologie utilisant deux blocs, un bloc de transistors de premier type, par exemple des MOSFET, et un bloc de transistors de deuxième type, par exemple IGBT, se fait en fonction des contraintes du bus de courant continu.

## Revendications

1. Système d'interruption de courant continu apte à ouvrir une ligne de courant continu à comportement inductif, comportant un interrupteur mécanique primaire (S0), un interrupteur mécanique secondaire (S1) et un circuit électronique de protection (B, B1, B2) de surtension comportant au moins un transistor, comportant en outre un système électronique d'ouverture (14, 72, 76) comportant un circuit passif (22, 74, 78) apte à auto-polariser le circuit électronique de protection (B, B1, B2) lors de l'ouverture dudit interrupteur mécanique primaire (S0), afin de déclencher une commutation dudit au moins un transistor (M1, M2, IG1, IG2) permettant de limiter la tension et le courant dans la ligne de courant continu, une coupure totale de ladite ligne de courant continu étant obtenue par ouverture ultérieure dudit interrupteur mécanique secondaire (S1), **caractérisé en ce que** ledit circuit électronique (B) de protection comporte une pluralité de transistors à effet de champ (M1, M2) montés en parallèle, aptes à commuter dans un mode ohmique dans un premier temps après ouverture dudit interrupteur primaire, puis dans un mode d'avalanche dans un deuxième temps lorsque la tension atteint une valeur prédéterminée (Vbr), et **en ce que** ledit circuit électronique de protection (B, B1) comporte en outre un système d'équilibrage d'avalanche (24, 79), permettant de faire fonctionner en mode d'avalanche quasi-simultanément ladite pluralité de transistors à effet de champ.

2. Système d'interruption de courant continu selon la revendication 1, **caractérisé en ce que** le système d'équilibrage d'avalanche (24, 79) comporte une résistance (R1, R2) montée en série avec chaque transistor (M1, M2) à effet de champ.

3. Système d'interruption de courant continu selon l'une quelconque des revendications 1 ou 2, **caractérisé en ce que** ledit circuit électronique de protection comporte un premier bloc (B1) apte à limiter la tension comportant au moins un transistor de premier type (M1, M2), et un deuxième bloc (B2) apte à limiter le courant comportant au moins un transistor de deuxième type (IG1, IG2).

4. Système d'interruption de courant continu selon la revendication 3, **caractérisé en ce que** ledit deuxième bloc (B2) comporte, pour chaque transistor de deuxième type (IG1), une résistance (R9) montée en série avec ledit transistor.

5. Système d'interruption de courant continu selon l'une quelconque des revendications 3 ou 4, **caractérisé en ce qu'**il comporte deux systèmes électroniques d'ouverture (72, 76), à savoir un premier système électronique d'ouverture (72) d'auto-polarisation rapide apte à actionner ledit premier bloc (B1) et un deuxième système électronique d'ouverture (76) d'auto-polarisation lente apte à actionner ledit deuxième bloc (B2), de manière à permettre, lors de l'ouverture dudit interrupteur mécanique primaire (S0), une limitation de la tension par ledit premier bloc (B1) suivie d'une limitation de courant par ledit deuxième bloc (B2).

6. Système d'interruption de courant continu selon l'une quelconque des revendications 3 à 5, **caractérisé en ce que**, lors de l'ouverture dudit interrupteur primaire (S0), les phases suivantes s'enchaînent :
- mise en oeuvre dudit premier bloc (B1) par le système électronique d'ouverture (72) d'auto-polarisation rapide, ledit au moins un transistor de premier type (M1, M2) fonctionnant en mode ohmique,
- mise en oeuvre dudit deuxième bloc (B2) par le système électronique d'ouverture (76) d'auto-polarisation lente, ledit au moins un transistor de premier type (M1, M2) étant en mode non passant,
- mise en oeuvre dudit premier bloc (B1) lorsque la tension atteint une valeur prédéterminée (Vbr), ledit au moins un transistor de premier type (M1, M2) fonctionnant en mode avalanche.

7. Système d'interruption de courant continu selon l'une quelconque des revendications 3 à 6, **caractérisé en ce que** ledit transistor de premier type (M1, M2) est un transistor MOSFET et ledit transistor de deuxième type (IG1, IG2) est un transistor IGBT.

8. Système d'interruption de courant continu selon l'une quelconque des revendications précédentes, **caractérisé en ce qu'**un dit système électronique d'ouverture (14, 72, 76) comporte au moins un circuit passif (22, 74, 78) composé d'une diode (D1, D2) montée en série avec un condensateur (C2, C3, C4), et une résistance (R4, R6, R10) montée en parallèle avec ledit condensateur (C2, C3, C4).

9. Système d'interruption de courant continu selon l'une quelconque des revendications précédentes, **caractérisé en ce qu'**un nombre de transistors montés en parallèle dans ledit circuit de protection (B, B1, B2) est déterminé en fonction des contraintes en tension, courant et inductance de ladite ligne à courant continu.

## Patentansprüche

1. System zum Unterbrechen von Gleichstrom, welches geeignet ist, eine Gleichstrom-Leitung mit induktivem Verhalten zu öffnen, aufweisend einen primären mechanischen Schalter (S0), einen sekundären mechanischen Schalter (S1) und eine elektronische Schaltung zum Schützen (B, B1, B2) vor Überspannung aufweisend mindestens einen Transistor, welches zusätzlich ein elektronisches System zum Öffnen (14, 72, 76) aufweist, welches einen passiven Schaltkreis (22, 74, 78) aufweist, welcher zur Auto-Polarisierung der elektronischen Schaltung zum Schützen (B, B1, B2) während des Öffnens des primären mechanischen Schalters (S0) geeignet ist, um ein Schalten des mindestens einen Transistors (M1, M2, IG1, IG2) auszulösen, welcher ermöglicht, die Spannung und den Strom in der Gleichstrom-Leitung zu begrenzen, wobei eine vollständige Unterbrechung der Gleichstrom-Leitung durch nachfolgendes Öffnen des sekundären mechanischen Schalters (S1) erhalten wird, **dadurch gekennzeichnet, dass** die elektronische Schaltung (B) zum Schützen eine Vielzahl von Feldeffekttransistoren (M1, M2) aufweist, welche parallel geschaltet sind, und welche geeignet sind, zunächst nach dem Öffnen des primären Schalters in einem Ohmschen Modus, dann in einen Lawinenmodus zuzuschalten, wenn die Spannung einen vorbestimmten Wert (Vbr) erreicht, und dass die elektronische Schaltung zum Schützen (B, B1) zusätzlich ein Lawinenausgleichssystem (24, 79) aufweist, welches ermöglicht, die Vielzahl von Feldeffekttransistoren dazu zu bringen, fast gleichzeitig im Lawinenmodus zu arbeiten.

2. System zum Unterbrechen von Gleichstrom nach Anspruch 1, **dadurch gekennzeichnet, dass** das Lawinenausgleichssystem (24, 79) einen Widerstand (R1, R2) aufweist, welcher in Reihe mit jedem Feldeffekttransistor (M1, M2) geschaltet ist.

3. System zum Unterbrechen von Gleichstrom nach Anspruch 1 oder 2, **dadurch gekennzeichnet, dass** die elektronische Schaltung zum Schützen eine erste Einheit (B1) aufweist, welche geeignet ist, die Spannung zu begrenzen, welche mindestens einen Transistor des ersten Typs (M1, M2) aufweist, und eine zweite Einheit (B2), welche geeignet ist, den Strom zu begrenzen, welche mindestens einen Transistor des zweiten Typs (IG1, IG2) aufweist.

4. System zum Unterbrechen von Gleichstrom nach Anspruch 3, **dadurch gekennzeichnet, dass** die zweite Einheit (B2) für jeden Transistor des zweiten Typs (IG1) einen Widerstand (R9) aufweist, welcher in Reihe mit dem Transistor geschaltet ist.

5. System zum Unterbrechen von Gleichstrom nach Anspruch 3 oder 4, **dadurch gekennzeichnet, dass** es zwei elektronische Systeme zum Öffnen (72, 76) aufweist, wobei das erste ein elektronisches System zum Öffnen (72) mit schneller Auto-Polarisierung ist, welches geeignet ist, die erste Einheit (B1) zu betätigen und das zweite ein elektronisches System zum Öffnen (76) mit langsamer Auto-Polarisierung ist, welches geeignet ist, die zweite Einheit (B2) zu betätigen, um damit, während der Öffnung des primären mechanischen Schalters (S0), eine Begrenzung der Spannung durch die erste Einheit (B1) gefolgt von einer Begrenzung des Stroms durch die zweite Einheit (B2) zu ermöglichen.

6. System zum Unterbrechen von Gleichstrom nach einem der Ansprüche 3 bis 5, **dadurch gekennzeichnet, dass**, während der Öffnung des primären Schalters (S0), die folgenden Schritte aufeinander folgen:
- Betreiben der ersten Einheit (B1) durch das elektronische System zum Öffnen (72) mit schneller Auto-Polarisierung, wobei der mindestens eine Transistor des ersten Typs (M1, M2) in Ohmschen Modus arbeitet,
- Betreiben der ersten Einheit (B2) durch das elektronische System zum Öffnen (76) mit langsamer Auto-Polarisierung, wobei der mindestens eine Transistor des ersten Typs (M1, M2) in einem geschlossenen Zustand ist,
- Betreiben der ersten Einheit (B1) wenn die Spannung einen bestimmten Wert (Vbr) erreicht, wobei der mindestens eine Transistor des ersten Typs (M1, M2) in Lawinenmodus arbeitet.

7. System zum Unterbrechen von Gleichstrom nach einem der Ansprüche 3 bis 6, **dadurch gekennzeichnet, dass** der Transistor des ersten Typs (M1, M2) ein MOSFET-Transistor ist und der Transistor des zweiten Typs (IG1, IG2) ein IGBT-Transistor ist.

8. System zum Unterbrechen von Gleichstrom nach einem der vorhergehenden Ansprüche, **dadurch gekennzeichnet, dass** ein elektronisches System zum Öffnen (14, 72, 76) mindestens einen passiven Schaltkreis (22, 74, 78) aufweist, welcher eine Diode (D1, D2), die in Reihe mit einem Kondensator (C2, C3, C4) geschaltet ist, und einen Widerstand (R4, R6, R10), welcher parallel mit dem Kondensator (C2, C3, C4) geschaltet ist, aufweist.

9. System zum Unterbrechen von Gleichstrom nach einem der vorhergehenden Ansprüche, **dadurch gekennzeichnet, dass** eine Anzahl von Transistoren in der Schaltung zum Schützen (B, B1, B2), welche parallel geschaltet sind, in Abhängigkeit von Beschränkungen bezüglich der Spannung, des Stroms und der Induktivität der Gleichstrom-Leitung bestimmt wird.

## Claims

1. DC current interruption system able to open a DC line with inductive behaviour, comprising a primary mechanical breaker (S0), a secondary mechanical breaker (S1) and an electronic overvoltage protection circuit (B, B1, B2) comprising at least one transistor, **characterised in that** it further comprises an electronic opening system (14, 72, 76) comprising a passive circuit (22, 74, 78) able to auto-bias the electronic protection circuit (B, B1, B2) upon the opening of said primary mechanical breaker (SO), so as to trigger a switching of said at least one transistor (M1, M2, IG1, IG2) making it possible to limit the voltage and the current in the DC line, with a total interruption of said DC line being obtained by subsequent opening of said secondary mechanical breaker (S1), **characterised in that** said electronic protection circuit (B) comprises a plurality of field effect transistors (M1, M2) mounted in parallel, able to switch to an ohmic mode in a first step after opening of said primary breaker, then to a breakdown mode in a second step when the voltage reaches a predetermined value (Vbr), and **in that** said electronic protection circuit (B, B1) further comprises a breakdown balancing system (24, 79), making it possible to operate in breakdown mode quasi-simultaneously said plurality of field effect transistors.

2. DC current interruption system according to claim 1, **characterised in that** the breakdown balancing system (24, 79) comprises a resistor (R1, R2) mounted in series with each field effect transistor (M1, M2).

3. DC current interruption system according to any of claims 1 or 2, **characterised in that** said electronic protection circuit comprises a first block (B1) able to limit the voltage comprising at least one transistor of the first type (M1, M2), and a second block (B2) able to limit the current comprising at least one transistor of the second type (IG1, IG2).

4. DC current interruption system according to claim 3, **characterised in that** said second block (B2) comprises, for each transistor of the second type (IG1), a resistor (R9) mounted in series with said transistor.

5. DC current interruption system according to any of claims 3 or 4, **characterised in that** it comprises two electronic opening systems (72, 76), i.e. a first electronic opening systems (72) with fast self-biasing able to actuate said first block (B1) and a second electronic opening system (76) with slow self-biasing able to actuate said second block (B2), in such a way as to allow, upon the opening of said primary mechanical breaker (SO), a limitation of the voltage by said first block (B1) followed by a limitation of current by said second block (B2).

6. DC current interruption system according to any of claims 3 to 5, **characterised in that**, upon the opening of said primary breaker (S0), the following phases are sequenced:
- implementation of said first block (B1) by the electronic opening system (72) with fast self-biasing, said at least one transistor of the first type (M1, M2) operating in ohmic mode,
- implementation of said second block (B2) by the electronic opening system (76) with slow self-biasing, said at least one transistor of the first type (M1, M2) being in non-passing mode,
- implementation of said first block (B1) when the voltage reaches a predetermined value (Vbr), said at least one transistor of the first type (M1, M2) operating in breakdown mode.

7. DC current interruption system according to any of claims 3 to 6, **characterised in that** said transistor of the first type (M1, M2) is a MOSFET transistor and said transistor of the second type (IG1, IG2) is a IGBT transistor.

8. DC current interruption system as claimed in any preceding claim, **characterised in that** a said electronic opening system (14, 72, 76) comprises at least one passive circuit (22, 74, 78) comprised of a diode (01, 02) mounted in series with a capacitor (C2, C3, C4), and a resistor (R4, R6, R10) mounted in parallel with said capacitor (C2, C3, C4).

9. DC current interruption system as claimed in any preceding claim, **characterised in that** a number of transistors mounted in parallel in said protection circuit (B, B1, B2) is determined according to constraints in voltage, current and inductance of said DC line.
